# EUROPEAN PATENT APPLICATION

(11) **EP 4 607 654 A1**
(43) Date of publication of application: **27.08.2025**
(21) Application number: 23936425.0
(22) Date of filing: 17.11.2023
(51) Int. Cl.: H01M 10/6557, H01M 10/613, H01M 10/6551, H01M 10/617, H01M 10/625

(54) **BATTERY AND ELECTRIC DEVICE**

(30) Priority: 08.05.2023 CN 202321088892 U
(71) Applicant: Contemporary Amperex Technology Co., Limited, Ningde, Fujian 352100 (CN)
(72) Inventor: GUO, Manyi, Ningde, Fujian 352100 (CN); LI, Ting, Ningde, Fujian 352100 (CN)
(74) Representative: Kraus & Lederer PartGmbB
(86) International application number: PCT/CN2023/132385
(87) International publication number: WO 2024/230121

(57) **Abstract**

A battery (200) and an electrical apparatus (1000). The battery (200) includes a plurality of rows of battery units (10A) and a heat exchange assembly (140). The plurality of rows of battery units (10A) are arranged in a first direction. Each row of battery units (10A) comprises a plurality of battery cells (10) arranged in sequence in a second direction. Each battery cell (10) includes a first side wall (111). The first side wall (111) is the side wall with the largest area. The first direction and the second direction are perpendicular to each other. The heat exchange assembly (140) includes a heat conducting plate (70). The heat conducting plate (70) extends between adjacent rows of battery units (10A). The heat conducting plate (70) directly faces the first side walls (111) of at least some of the adjacent battery cells (10) of adjacent battery units (10A).

## Description

### CROSS-REFERENCE TO RELATED APPLICATION

This application is proposed and claims priority to Chinese Patent Application No. 202321088892.6 filed May 08, 2023, which is incorporated by reference in its entirety.

### TECHNICAL FIELD

The present application relates to the technical field of batteries, and in particular, to a battery and an electrical apparatus.

### BACKGROUND

In recent years, new energy vehicles have made a leap forward in development. In the field of electric vehicles, batteries, as power sources of electric vehicles, play an irreplaceable and important role. Typically, a battery includes a plurality of battery cells which are arranged in sequence. This causes a non-uniform force between the battery cells, which can easily lead to a battery cell failure.

### SUMMARY

The present application provides a battery and an electrical apparatus, which can improve an anti-deformation ability of a first side wall of a battery cell, so as to reduce a probability of a battery cell failure caused by a non-uniform force on the battery cell and improve the reliability of the battery.

In a first aspect, an embodiment of the present application provides a battery. The battery includes: a plurality of rows of battery units, wherein the plurality of rows of battery units are arranged in a first direction; each row of battery units includes a plurality of battery cells arranged in sequence in a second direction; each battery cell includes a first side wall; the first side wall is the side wall with the largest area; the first direction and the second direction are perpendicular to each other; and a heat exchange assembly, wherein the heat exchange assembly includes a heat conducting plate; the heat conducting plate extends between adjacent rows of battery units; and the heat conducting plate directly faces the first side walls of at least some of the battery cells of adjacent battery units.

In the above technical solution, the heat conducting plate extends between the adjacent battery units, and the heat conducting plate directly faces the first side walls of at least some of the battery cells of the adjacent battery units, so that it is convenient to achieve a larger direct-facing area between the heat conducting plate and at least some of the battery cells of the adjacent battery units in the first direction, which is beneficial to enhancing the temperature control effect on the battery. Meanwhile, the heat conducting plate can play an enhancement role on the first side walls of at least some of the battery cells, so as to improve the anti-deformation ability of the first side walls of the corresponding battery cells, to reduce the probability of a failure of a battery cell caused by a non-uniform force on the battery cells, thereby improving the reliability of the battery.

In some embodiments, opposite side walls of the heat conducting plate are in contact with a plurality of first side walls opposite to each other.

In the above technical solution, the opposite side walls of the heat conducting plate are in contact with the plurality of first side walls opposite to each other, so that it is convenient to achieve the heat-conducting connection between the heat conducting plate and at least some of the first side walls of the adjacent battery units, and the structure of the battery is simplified. Meanwhile, the side walls of the heat conducting plate can directly play a role of supporting the first side walls of the battery cells, to further improve the anti-deformation ability of the first side walls, thereby further improving the problem of a non-uniform force on the battery cells.

In some embodiments, a cavity for buffering a stress is provided inside the heat conducting plate.

In the above technical solution, the cavity for buffering the stress is provided inside the heat conducting plate, so that when the battery cells expand during use, due to the cavity, the heat conducting plate can deform when it is directly or indirectly subjected to a force of the battery cells, thereby reducing an extrusion force between the heat conducting plate and the battery cells, avoiding damage to the heat conducting plate and the battery cells, and helping to improve the reliability of the heat conducting plate and the reliability of the battery cells. Meanwhile, due to the arrangement of the cavity, it is convenient to absorb an assembling tolerance of the battery cells in rows in the process of assembling the heat conducting plate and the battery cells, thereby improving the convenience of assembling of the heat conducting plate and the battery cells. Moreover, the arrangement of the cavity helps to reduce the weight of the heat conducting plate, thereby reducing the weight of the battery and helping to improve the weight energy density of the battery.

In some embodiments, a supporting assembly is arranged inside the cavity; the heat conducting plate includes two heat conducting side walls opposite to each other; the heat conducting side walls directly face the first side walls; the supporting assembly is respectively connected to the two heat conducting side walls; and the supporting assembly is configured to make a distance between the two heat conducting side walls variable.

In the above technical solution, the supporting assembly is arranged inside the cavity, and the supporting assembly is configured to make the distance between the two heat conducting side walls variable, so that the supporting assembly can play a role of supporting the two heat conducting side walls, thereby improving the anti-bending deformation ability and elastic recovery ability of the heat conducting plate, and improving the reliability of the heat conducting plate. Meanwhile, the supporting assembly can also adapt to direct or indirect extrusion on the heat conducting plate caused by the expansion of the battery cells, to avoid an excessive extrusion force between the heat conducting plate and the battery cells.

In some embodiments, a plurality of separated sub-chambers are defined between the supporting assembly and at least one of the heat conducting side walls.

In the above technical solution, the plurality of separated sub-chambers are defined between the supporting assembly and at least one of the heat conducting side walls. The sub-chambers can provide an avoidance space for the deformation of the supporting assembly and/or the heat conducting side wall, so that while supporting the heat conducting side walls, the supporting assembly can balance the anti-bending deformation ability, elastic deformation ability, and elastic recovery ability of the heat conducting side wall. Meanwhile, the weight of the supporting assembly cannot be excessively increased, which is beneficial to avoiding an excessive increase in the weight of the heat exchange assembly and facilitates improving the weight energy density of the battery.

In some embodiments, on a cross section parallel to the first direction and a second direction, a cross section of each of the sub-chambers is a triangle.

In the above technical solution, since the cross section of each sub-chamber is the triangle, it is beneficial to simplifying the structure of the supporting assembly and simplifying the connection between the supporting assembly and each heat conducting side wall. Meanwhile, it is convenient for the supporting assembly to have a good elastic deformation ability and a good elastic recovery ability, so that the distance between the two heat conducting side walls can better adapt to the expansion deformation of the battery cells.

In some embodiments, the cavity is filled with a heat absorption material.

In the above technical solution, since the heat absorption material is arranged inside the cavity, it is beneficial to improving the heat exchange capability of the heat exchange assembly and facilitates improving the heat management effect on the battery cells.

In some embodiments, the heat absorption material is a solid-liquid phase change material.

In the above technical solution, since the heat absorption material is the solid-liquid phase change material, the phase change material undergoes a solid-liquid phase change at a high temperature and absorbs heat at the same time, to further improve the heat absorption and heat conduction capabilities of the heat exchange assembly and improve the temperature control capability of the battery.

In some embodiments, the battery further includes a box body, wherein the plurality of rows of battery units are arranged in the box body; and the heat conducting plate is fixed to the box body.

In the above technical solution, by the arrangement of the box body, a protection effect can be achieved on the plurality of rows of battery units and the heat conducting plate. Fixing the heat conducting plate to the box body is beneficial to improving the structural reliability of the battery. Moreover, the box body can play a limiting role on the battery units through the heat conducting plate, to achieve stable arrangement of the battery units.

In some embodiments, the heat exchange assembly further includes a heat exchange plate; in a third direction, the heat exchange plate is located on one side of the plurality of rows of battery units; the third direction is perpendicular to the first direction and the second direction respectively; and the heat conducting plate is arranged on a surface of the heat exchange plate facing the battery units and is in heat-conducting connection to the heat exchange plate.

In the above technical solution, by the arrangement of the heat exchange plate, the heat exchange plate is in heat-conducting connection to the heat conducting plate, so that the heat exchange plate can at least exchange heat with the battery cells through the heat conducting plate, so as to further reduce heat transferred from a battery cell to another single battery cell, thereby inhibiting thermal spread.

In some embodiments, the heat conducting plate is a solid metal plate.

In the above technical solution, since the heat conducting plate is the solid metal plate, it is convenient to simplify the structure and processing procedures of the heat conducting plate, and meanwhile, it is convenient to ensure the heat conduction capability of the heat conducting plate.

In some embodiments, a thermally conductive adhesive layer is arranged between the heat conducting plate and the battery cells.

In the above technical solution, since the thermally conductive adhesive layer is arranged between the heat conducting plate and the battery cells, the thermally conductive adhesive layer is arranged between the heat conducting plate and the first side walls, thereby effectively achieving the heat-conducting connection between the heat conducting plate and the battery cells, facilitating improving the heat transfer efficiency for the heat conducting plate and the battery cells, and enhancing the temperature control effect on the battery. Moreover, the heat conducting plate can also play an enhancement role on the first side walls of the corresponding battery cells to an extent, thereby improving the problem of a non-uniform force on the battery cells.

In some embodiments, the heat exchange plate and the heat conducting plate are integrated structural members.

In the above technical solution, since the heat conducting plate and the heat exchange plate are the integrated structural members, it is convenient to improve the strength of the heat conducting plate and the strength of the heat exchange plate, save connection procedures for the heat conducting plate and the heat exchange plate, and improve the assembling efficiency of the battery. Meanwhile, it is conductive to improving the heat transfer efficiency for the heat conducting plate and the heat exchange plate to an extent.

In some embodiments, the first side walls of at least two adjacent rows of the battery units are staggered in the second direction, and at least a portion of the heat conducting plate is located between the staggered battery units.

In the above technical solution, since the first side walls of the at least two adjacent rows of battery units are staggered in the second direction, it is beneficial to making full use of an arrangement space of the battery and improving the adaptability of the plurality of battery cells to arrangement spaces in different shapes. Meanwhile, for two battery cells that are staggered, an amount of heat transferred from any one of the battery cells to the other battery cell can be reduced, thereby achieving a purpose of inhibiting thermal spread, which is beneficial to improving the reliability of use of the battery.

In a second aspect, an embodiment of the present application provides an electrical apparatus, including the above battery.

In the above technical solution, since the above battery is arranged in the electrical apparatus, and the heat conducting plate can improve the anti-deformation ability of the first side walls of the battery, it is beneficial to improving the reliability of the electrical apparatus.

### BRIEF DESCRIPTION OF DRAWINGS

These and other aspects and advantages of embodiments of the present application will become apparent and more readily appreciated from the following descriptions made with reference to the drawings. Where:
FIG. 1 is a schematic structural diagram of a vehicle according to some embodiments of the present application;
FIG. 2 is an exploded view of a structure of a battery according to some embodiments of the present application;
FIG. 3 is a schematic structural diagram of a battery cell according to some embodiments of the present application;
FIG. 4 is a schematic structural diagram of a heat exchange assembly according to some embodiments of the present application;
FIG. 5 is a schematic diagram of a heat exchange plate shown in FIG. 4;
FIG. 6 is a schematic structural diagram of a battery according to some embodiments of the present application;
FIG. 7 is another schematic diagram of the battery shown in FIG. 6;
FIG. 8 is a sectional view of the battery shown in FIG. 6;
FIG. 9 is a sectional view of a battery according to some embodiments of the present application;
FIG. 10 is a sectional view of a heat conducting plate according to some embodiments of the present application;
FIG. 11 is a sectional view of a heat conducting plate according to some embodiments of the present application;
FIG. 12 is a sectional view of a heat conducting plate according to some embodiments of the present application;
FIG. 13 is a schematic diagram of an orthographic projection of two first side walls that are staggered according to some embodiments of the present application;
FIG. 14 is a schematic structural diagram of a battery according to some embodiments of the present application; and
FIG. 15 is an enlarged view of circle A in FIG. 14.

Numerals in the accompanying drawings:
electrical apparatus 1000, battery 200, controller 300, motor 400,
first direction X, second direction Y, third direction Z, first region Ω1, second region Ω2, third region Ω3,
battery cell 10, battery unit 10A, first side wall 111, second side wall 112, terminal post 12, box body 30, first box body 301, second box body 302,
heat conducting plate 70, cavity 70a, sub-chamber 70b, heat conducting side wall 71,
supporting assembly 80, heat absorption material 90, heat exchange plate 100, and heat exchange assembly 140.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearances of the phrase in various places in the specification neither necessarily refer to a same embodiment, nor are independent or alternative embodiments mutually exclusive with other embodiments.

In the present application, the term "and/or" is only an association relationship for describing associated objects, indicating that three relationships may exist. For example, A and/or B may represent three situations: A exists alone, both A and B exist, and B exists alone. **In** addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "a plurality of" means two or more.

In the present application, the battery cell may include a lithium-ion secondary battery, a lithium-ion primary battery, a lithium sulfur battery, a sodium lithium-ion battery, a sodium-ion battery or a magnesium-ion battery and so on. This is not limited in the embodiments of the present application. The battery cell may be in a cylindrical shape, a flat shape, a cuboid shape or another shape, which is also not limited in the embodiments of the present application. Battery cells are generally divided into three kinds according to packaging manners: cylindrical battery cells, square battery cells, and pouch cells. The embodiments of the present application do not limit this.

A battery mentioned in the embodiments of the present application refers to a single physical module including a plurality of battery cells to provide a higher voltage and capacity. For example, the battery mentioned in the present application may be a battery module, a battery pack, or the like. The battery module usually includes a plurality of battery cells. The battery usually includes a box body for encapsulating the plurality of battery cells or a plurality of battery modules. The box body can avoid liquid or other foreign matters from affecting charging or discharging of the battery cells. Certainly, the battery may not include the box body.

Exemplarily, a battery cell may generally include a case, a battery cell assembly, and an electrolyte solution. The case is configured to accommodate the battery cell assembly and the electrolyte solution, and at least one positive electrode terminal post and at least one negative electrode terminal post are arranged on the case. The battery cell assembly includes one or more electrode assemblies, and each electrode assembly is formed by stacking or winding a positive electrode plate, a negative electrode plate, and a separator.

The positive electrode plate usually includes a positive electrode current collector and a positive electrode active material layer. The positive electrode active material layer is coated on the positive electrode current collector directly or indirectly. The positive electrode current collector not coated with the positive electrode active material layer protrudes out of the positive electrode current collector coated with the positive electrode active material layer, and the positive electrode current collector not coated with the positive electrode active material layer serves as a positive tab. A plurality of positive tabs are stacked together and are electrically connected to the positive electrode terminal post. For example, the plurality of stacked positive tabs can be directly welded to the positive electrode terminal post to form an electrical connection. Alternatively, the battery cell assembly may further include a positive electrode adapter plate. The plurality of stacked positive tabs are welded to one end of the positive electrode adapter plate, and the other end of the positive electrode adapter plate is welded to the positive electrode terminal post, to form an electrical connection between the positive tabs and the positive electrode terminal post.

The negative electrode plate includes a negative electrode current collector and a negative electrode active material layer. The negative electrode active material layer is coated on the surface of the negative electrode current collector. The negative electrode current collector not coated with the negative electrode active material layer protrudes out of the negative electrode current collector coated with the negative electrode active material layer, and the negative electrode current collector not coated with the negative electrode active material layer serves as a negative tab. A plurality of negative tabs are stacked together and are electrically connected to the negative electrode terminal post. For example, the plurality of stacked negative tabs can be directly welded to the negative electrode terminal post to form an electrical connection. Alternatively, the battery cell assembly may further include a negative electrode adapter plate. The plurality of stacked negative tabs are welded to one end of the negative electrode adapter plate, and the other end of the negative electrode adapter plate is welded to the negative electrode terminal post, to form an electrical connection between the negative tabs and the negative electrode terminal post. A material of the separator is not limited, and may be polypropylene, polyethylene, or the like.

In recent years, new energy vehicles have made a leap forward in development. **In** the field of electric vehicles, batteries, as power sources of electric vehicles, play an irreplaceable and important role. The batteries, as core components of the new energy vehicles, have high requirements for energy densities and reliability.

In the related art, a battery includes a plurality of battery cells which are arranged in sequence. This causes a non-uniform force between the battery cells, which can easily lead to a battery cell failure.

Based on the above considerations, in order to improve the problem of a non-uniform force between battery cells, a battery is provided. The battery includes: a plurality of rows of battery units and a heat exchange assembly. The plurality of rows of battery units are arranged in a first direction. Each row of battery units includes a plurality of battery cells arranged in sequence in a second direction. Each battery cell includes a first side wall. The first side wall is the side wall with the largest area. The first direction and the second direction are perpendicular to each other. The heat exchange assembly includes a heat conducting plate. The heat conducting plate extends between adjacent rows of battery units. The heat conducting plate directly faces the first side walls of at least some of the battery cells of adjacent battery units.

In the above technical solution, the heat conducting plate extends between the adjacent battery units, and the heat conducting plate directly faces the first side walls of at least some of the battery cells of the adjacent battery units, so that it is convenient to achieve a larger direct-facing area between the heat conducting plate and at least some of the battery cells of the adjacent battery units in the first direction, which is beneficial to enhancing the temperature control effect on the battery. Meanwhile, the heat conducting plate can play an enhancement role on the first side walls of at least some of the battery cells, so as to improve the anti-deformation ability of the first side walls of the corresponding battery cells, to reduce the probability of a failure of a battery cell caused by a non-uniform force on the battery cells, thereby improving the reliability of the battery.

Embodiments of the present application provide an electrical apparatus that uses a battery of the present disclosure as a power source, and the electrical apparatus may be, but is not limited to, a mobile phone, a tablet, a notebook, an electric toy, an electric tool, a battery vehicle, an electric vehicle, a ship, a spacecraft, and the like. The electric toy may include fixed or mobile electric toys, such as a game machine, an electric vehicle toy, an electric ship toy, and an electric airplane toy. The spacecraft may include an airplane, a rocket, a space shuttle, a spaceship, and the like.

For convenience of explanation, the following embodiments take the electrical apparatus 1000 being a vehicle as an example, and describe in detail structures of the electrical apparatus 1000, a battery 200, and a battery cell 10 of the present application.

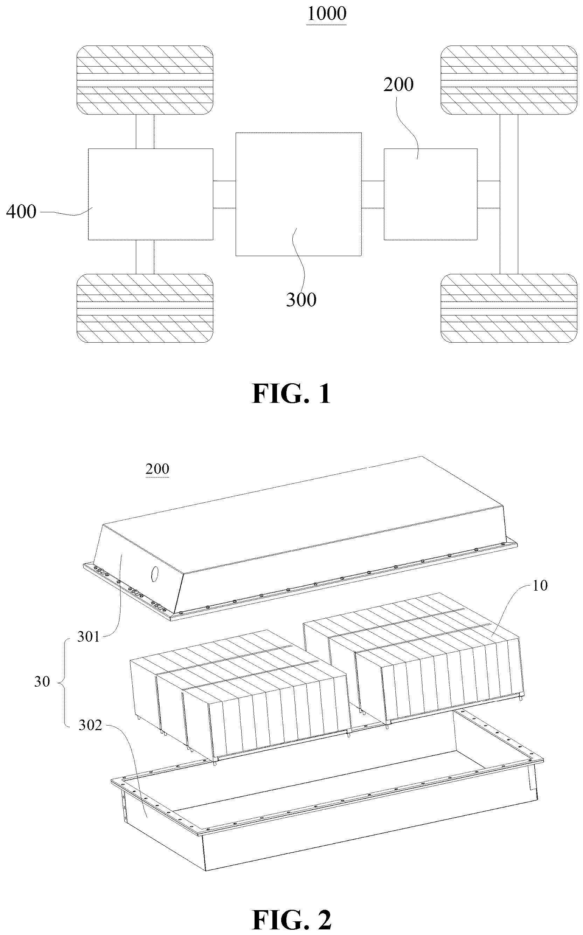

Referring to FIG. 1, FIG. 1 is a schematic structural diagram of an electrical apparatus 1000 according to some embodiments of the present application. The vehicle may be a fuel vehicle, a gas vehicle, or a new energy vehicle, and the new energy vehicle may be a battery electric vehicle, a hybrid electric vehicle, an extended range vehicle, or the like. A battery 200 is arranged in the vehicle. The battery 200 may be arranged at a bottom or head or tail of the vehicle. The battery 200 may be configured to supply power the vehicle. For example, the battery 200 may be used as an operating power source of the vehicle. The vehicle may further include a controller 300 and a motor 400. The controller 300 is configured to control the battery 200 to supply power to the motor 400, for example, to meet a demand for working power during starting, navigation, and driving of the vehicle. In some embodiments of the present application, the battery 200 not only may serve as the operating power source of the vehicle, but also may serve as a driving power source of the vehicle, thus replacing or partially replacing fuel or natural gas to provide driving power for the vehicle.

Referring to FIG. 2, FIG. 2 is an exploded view of a structure of a battery cell 10 used in a battery 200 according to some embodiments of the present application. The battery 200 includes a box body 30 and a plurality of battery cells 10. The battery cells 10 are accommodated in the box body 30. The box body 30 is configured to provide an accommodating space for the battery cells, and the box body 30 may be of various structures. In some embodiments, the box body 30 may include a first box body 301 and a second box body part 302. The first box body 301 is covered with the second box body 302. The first box body 301 and the second box body 302 jointly define an accommodating space configured to accommodate the battery cells. The second box body 302 may be of a hollow structure with one end opened. The first box body 301 may be of a platy structure. The first box body 301 is covered at an open side of the second box body 302, to enable the first box body 301 and the second box body 302 to jointly define an accommodating cavity. Alternatively, both the first box body 301 and the second box body 302 are of hollow structures with one side opened (for example, as shown in FIG. 2). The open side of the first box body 301 is covered at the open side of the second box body 302. Certainly, the box body 30 formed by the first box body 301 and the second box body 302 may be in various shapes, such as cylinders or cuboids.

In the battery 200, the plurality of battery cells may be connected in series or in parallel or be in parallel-series connection. The parallel-series connection means that the plurality of battery cells are connected in both series and parallel. The plurality of battery cells may be directly connected in series, in parallel, or in parallel-series connection, and then an entirety formed by the plurality of battery cells is accommodated in the box body 30. Alternatively, the battery 200 may also be in a form of a battery module formed by connecting the plurality of battery cells in series, in parallel, or in parallel-series connection, and then a plurality of battery modules are connected in series, in parallel, or in parallel-series connection to form an entirety which is accommodated in the box body 30. The battery 200 may further include other structures. For example, the battery 200 may further include a busbar for electrically connecting the plurality of battery cells.

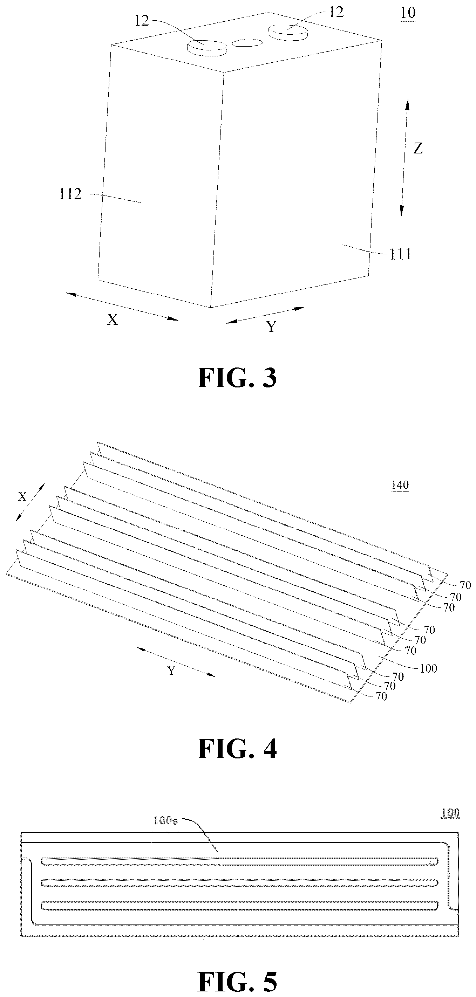

Referring to FIG. 3, FIG. 3 is a schematic structural diagram of a battery cell 10 according to some embodiments of the present application. The battery cell 10 is a cuboid, and the battery cell 10 is a cuboid. A height direction of the battery cell 10 is a third direction Z. A length direction of the battery cell 10 is a second direction Y. A thickness direction of the battery cell 10 is a first direction X. Every two of the first direction X, the second direction Y and the third direction Z are perpendicular to each other. The shape of the battery cell 10 is not limited to this. In other embodiments of the present application, the battery cell 10 may also be a polyprism, a flat body, in another shape, or the like.

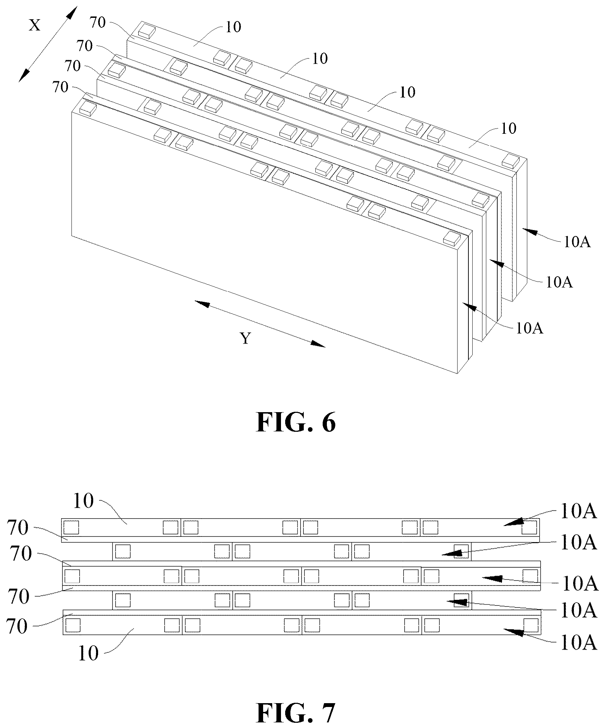

Referring to FIG. 4 and FIG. 6, in this embodiment of the present application, the battery 200 includes a plurality of rows of battery units 10A and a heat exchange assembly 140. The plurality of rows of battery units 10A are arranged in the first direction X. Each row of battery units 10A includes a plurality of battery cells 10 arranged in sequence in the second direction Y. Each battery cell 10 includes a first side wall 111. The first side wall 111 is a side wall having a largest area. Therefore, the first side wall 111 is a "large surface" of the battery cell 10. There may be one or more first side walls 111 of the battery cell 10, and quantities of the first side walls 111 of the plurality of battery cells 10 can be equal or not equal. The heat exchange assembly 140 includes a heat conducting plate 70. The heat conducting plate 70 extends between adjacent rows of battery units 10A. The heat conducting plate 70 directly faces the first side walls 111 of at least some of the battery cells 10 of adjacent battery units 10A. The first direction X is perpendicular to the second direction Y.

It can be seen that since the plurality of rows of battery units 10A are arranged in sequence in the first direction X. At least a portion of the heat conducting plate 70 is located between adjacent rows of battery units 10A, and the heat conducting plate 70 directly faces the first side walls 111 of at least some of the battery cells 10 of the adjacent battery units 10A, so that the first direction X may be perpendicular to the first side walls 111 of the battery cells 10. Meanwhile, it is convenient to make orthographic projections of the first side walls 111 of at least some of the battery cells 10 in the first direction X are located inside an outer contour of an orthographic projection of the heat conducting plate 70 in the first direction X. Therefore, a larger direct-facing area is provided between the heat conducting plate 70 and at least some of the battery cells 10 of the adjacent battery units 10A in the first direction X, which is conducive to improving the conducting rate of the heat conducting plate 70 on heat of at least some of the battery cells 10, or improving the rate of the heat conducting plate 70 for conducting other heat to the above battery cells 10 and enhancing the temperature control effect on the battery 200. Meanwhile, the heat conducting plate 70 can play an enhancement role on the first side walls 111 of at least some of the battery cells 10, so as to improve the anti-deformation ability of the first side walls 111 of the corresponding battery cells 10, to reduce the probability of a failure of a battery cell 10 caused by a non-uniform force on the battery cells 10, thereby improving the problem of the non-uniform force on the battery cells 10, and improving the reliability of the battery 200.

It can be understood that for battery units 10A adjacent to the heat conducting plate 70, at least one first side wall 111 of the plurality of battery cells 10 in the row of battery units 10A may directly face the heat conducting plate 70 in the first direction X. For example, for battery units 10A adjacent to the heat conducting plate 70, the first side wall 111 of each battery cell 10 in this row of battery units 10A directly faces the heat conducting plate 70. Alternatively, for battery units 10A adjacent to the heat conducting plate 70, the first side walls 111 of some of the battery cells 10 in this row of battery units 10A directly face the heat conducting plate 70, and at least one first side wall 111 in the remaining battery cells 10 may be staggered from the heat conducting plate 70 (for example, the first side wall 111 is staggered from the heat conducting plate 70 in the second direction Y, and certainly, they may also be staggered in other directions), and/or, at least one first side wall 111 in the remaining battery cells 10 may be spaced apart from the heat conducting plate 70 in the second direction Y. The first side wall 111 is staggered from the heat conducting plate 70, which can be understood as a portion of an orthographic projection of the first side wall 111 in the first direction X is located within an orthographic projection range of the heat conducting plate 70 in the first direction X, and another portion is located beyond the orthographic projection range of the heat conducting plate 70 in the first direction X.

In addition, a quantity of the heat conducting plate 70 may be set according to an actual need. For example, a quantity of the battery units 10A is m, and the quantity of the heat conducting plate 70 may be (m-1). In this case, the heat conducting plates 70 are respectively arranged between any adjacent battery units 10A. Certainly, the quantity of the heat conducting plate 70 may also be less than (m-1).

In the above technical solution, the heat conducting plate 70 extends between the adjacent battery units 10A, and the heat conducting plate 70 directly faces the first side walls 111 of at least some of the battery cells 10 of the adjacent battery units 10A, so that it is convenient to achieve a larger direct-facing area between the heat conducting plate 70 and at least some of the battery cells 10 of the adjacent battery units 10A in the first direction X, which is beneficial to enhancing the temperature control effect on the battery 200. Meanwhile, the heat conducting plate 70 can play an enhancement role on the first side walls 111 of at least some of the battery cells 10, so as to improve the anti-deformation ability of the first side walls 111 of the corresponding battery cells 10, to reduce the probability of a failure of a battery cell 10 caused by a non-uniform force on the battery cells 10, thereby improving the reliability of the battery 200.

Moreover, in the above technical solution, there is no specific limitation on relative arrangement of the battery cells 10 in the adjacent rows of battery units 10A. For example, at least two adjacent rows of battery units 10A are staggered in the second direction Y, and/or, at least two adjacent rows of battery units 10A directly face each other (i.e., are non-staggered in the second direction Y).

For example, a side wall of a battery cell 10 in the third direction Z is fixed to an inner wall of the box body 30 through a structural adhesive, and the third direction Z is perpendicular to the first direction X and the second direction Y respectively. For example, the third direction Z being an up-down direction is taken as an example. A terminal post 12 is arranged on a top side wall of the battery cell 10. A bottom side wall of the battery cell 10 is fixed to the inner wall of the box body 30 through the structural adhesive, which is beneficial to improving the strength of connection between the battery cell 10 and the box body 30, and improving the overall structural stability of the battery 200.

Certainly, a fixing mode for the battery cells 10 is not limited to this. For example, any two adjacent battery cells 10 of a battery unit 10A are bonded and fixed. Two battery units 10A, located on the outermost side in the second direction Y, of the battery units 10A are respectively bonded and fixed to the corresponding inner walls of the box body 30.

It can be understood that when a temperature of a battery cell 10 is too high, the heat conducting plate 70 may be configured to cool the battery cell 10, to reduce the temperature of the battery cell 10. When the temperature of the battery cell 10 is too low, the heat conducting plate 70 may be configured to heat the battery cell 10 to increase the temperature of the battery cell 10. In the following description of the present application, the heat conducting plate 70 being configured to cool the battery cell 10 is taken as an example for explanation. A person skilled in the art can easily understand an implementation solution of the heat conducting plate 70 for heating the battery cell 10 after reading the following solution.

Referring to FIG. 6 to FIG. 8, in some embodiments of the present application, opposite side walls of the heat conducting plate 70 are in contact with a plurality of first side walls 111 opposite to each other.

For example, the opposite side walls of the heat conducting plate 70 are respectively a first heat conducting side wall 71 and a second heat conducting side wall 71. The first heat conducting side wall 71 is in contact with the plurality of first side walls 111 of one adjacent battery unit 10A, and the second heat conducting side wall 71 is in contact with the plurality of first side walls 111 of another adjacent battery unit 10A.

In the above technical solution, the opposite side walls of the heat conducting plate 70 are in contact with the plurality of first side walls 111 opposite to each other, so that it is convenient to achieve the heat-conducting connection between the heat conducting plate 70 and at least some of the first side walls 111 of the adjacent battery units 10A, and the structure of the battery 200 is simplified. Meanwhile, the side walls of the heat conducting plate 70 can directly play a role of supporting the first side walls 111 of the battery cells 10, to further improve the anti-deformation ability of the first side walls 111, thereby further improving the problem of a non-uniform force on the battery cells 10.

For example, the opposite side walls of the heat conducting plate 70 are in contact with the first side wall 111 of each battery cell 10 of the corresponding battery unit 10A.

In some embodiments, the heat conducting plate 70 is in heat-conducting connection to at least one first side wall 111 of the corresponding battery unit 10A. In the third direction Z, a height of the heat conducting plate 70 is consistent with a shoulder height of a battery cell 10.

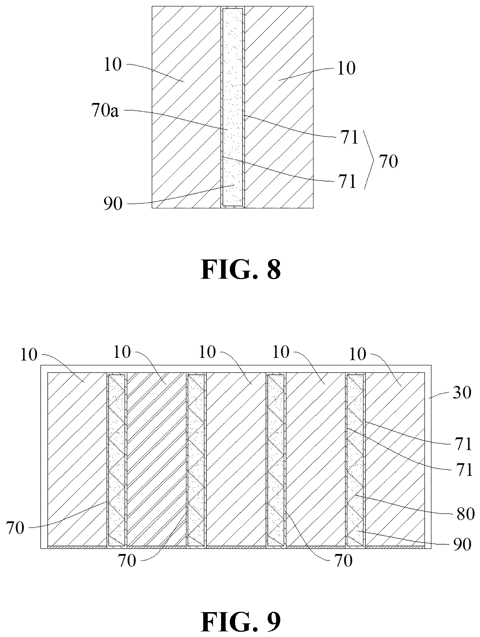

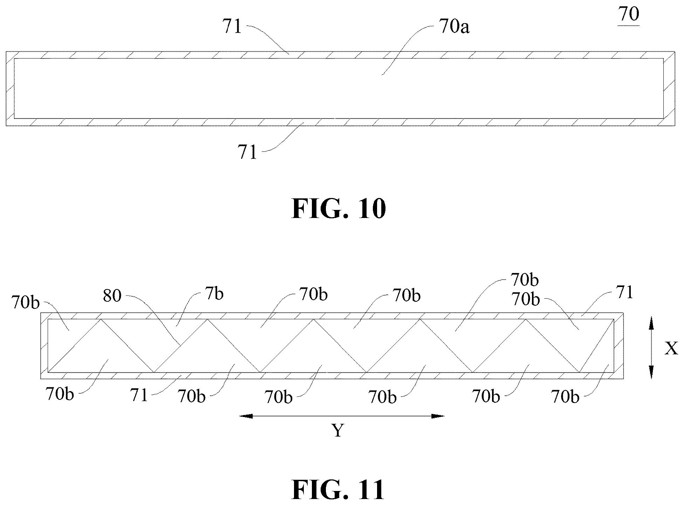

Referring to FIG. 9 to FIG. 12, in some embodiments of the present application, a cavity 70a for buffering a stress is provided inside the heat conducting plate 70, and the cavity 70a is configured to be deformable when the heat conducting plate 70 undergoes a pressure, to buffer the stress.

In the above technical solution, the cavity 70a for buffering the stress is provided inside the heat conducting plate 70, so that when the battery cells 10 expand during use, due to the cavity 70a, the heat conducting plate 70 can deform when it is directly or indirectly subjected to a force of the battery cells 10, thereby reducing an extrusion force between the heat conducting plate 70 and the battery cells 10, avoiding damage to the heat conducting plate 70 and the battery cells 10, and helping to improve the reliability of the heat conducting plate 70 and the reliability of the battery cells 10. Meanwhile, due to the arrangement of the cavity 70a, it is convenient to absorb an assembling tolerance of the battery cells 10 in rows in the process of assembling the heat conducting plate 70 and the battery cells 10, thereby improving the convenience of assembling of the heat conducting plate 70 and the battery cells 10. Moreover, the arrangement of the cavity 70a helps to reduce the weight of the heat conducting plate 70, thereby reducing the weight of the battery 200 and helping to improve the weight energy density of the battery 200.

For example, the heat conducting plate 70 is bonded and fixed to the battery cells 10.

Referring to FIG. 9, FIG. 11, and FIG. 12, in some embodiments of the present disclosure, a supporting assembly 80 is arranged inside the cavity 70a. The heat conducting plate 70a includes two heat conducting side walls 71 opposite to each other. The heat conducting side walls 71 directly face the first side walls 111. The supporting assembly 80 is respectively connected to the two heat conducting side walls 71. The supporting assembly 80 is configured to make a distance between the two heat conducting side walls 71 variable.

For example, when the heat conducting plate 70 is subjected to a pressure, the supporting assembly 80 is compressed to deform, and the distance between the two heat conducting side walls 71 decreases. When the pressure applied to the heat conducting plate 70 is removed, the supporting assembly 80 can apply a force to the heat conducting side walls 71, so that the distance between the two heat conducting side walls 71 tends to the distance before the pressure is applied. For example, if the heat conducting side walls 71 are in contact with the plurality of first side walls 111 opposite thereto, when the expansion deformation of the battery cells 10 is reduced, the supporting assembly 80 can apply a force to the heat conducting side walls 71, so that the heat conducting side walls 71 maintain contact with the plurality of first side walls 111, thereby reducing the impact of the expansion deformation of the battery cells 10 on heat management of the battery cells 10.

In the above technical solution, the supporting assembly 80 is arranged inside the cavity 70a, and the supporting assembly 80 is configured to make the distance between the two heat conducting side walls 71 variable, so that the supporting assembly 80 can play a role of supporting the two heat conducting side walls 71, thereby improving the anti-bending deformation ability and elastic recovery ability of the heat conducting plate 70, and improving the reliability of the heat conducting plate 70. Meanwhile, the supporting assembly 80 can also adapt to direct or indirect extrusion on the heat conducting plate 70 caused by the expansion of the battery cells 10, to avoid an excessive extrusion force between the heat conducting plate 70 and the battery cells 10.

It can be seen that the arrangement of the supporting assembly 80 will not cause the cavity 70a to be unable to buffer the stress, but can enable the heat conducting plate 70 to simultaneously balance the anti-bending deformation ability, the elastic recovery ability, and the stress buffering ability.

For example, the two heat conducting side walls 71 of the heat conducting plate 70 are opposite to each other in the first direction X. The cavity 70a is located between the two heat conducting side walls 71, and each heat conducting side wall 71 extends in the second direction Y. The heat conducting plate 70 has a simple structure and is convenient to process.

Referring to FIG. 9, FIG. 11, and FIG. 12, in some embodiments of the present application, a plurality of separated sub-chambers 70b are defined between the supporting assembly 80 and at least one of the heat conducting side walls 71.

In the above technical solution, the plurality of separated sub-chambers 70b are defined between the supporting assembly 80 and at least one of the heat conducting side walls 71. The sub-chambers 70b can provide an avoidance space for the deformation of the supporting assembly 80 and/or the heat conducting side wall 71, so that while supporting the heat conducting side walls 71, the supporting assembly 80 can balance the anti-bending deformation ability, elastic deformation ability, and elastic recovery ability of the heat conducting side wall 71. Meanwhile, the weight of the supporting assembly 80 cannot be excessively increased, which is beneficial to avoiding an excessive increase in the weight of the heat exchange assembly 140 and facilitates improving the weight energy density of the battery 200.

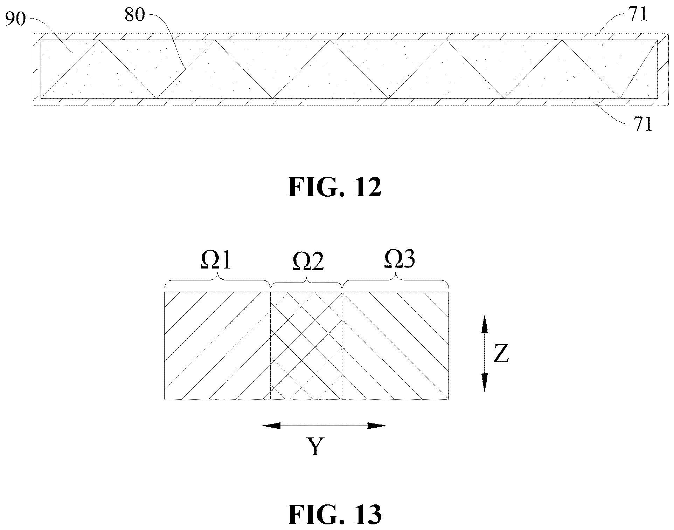

Exemplarily, in the example of FIG. 12, the supporting assembly 80 and each heat conducting side wall 71 respectively define a plurality of separated sub-chambers 70b. The sub-chambers 70b defined between the supporting structure 80 and one of the heat conducting side walls 71 are denoted as first sub-chambers, and the sub-chambers 70b defined between the supporting structure 80 and the other heat conducting side wall 71 are recorded as second sub-chambers. Cross sections of both the first sub-chambers and the second sub-chambers are triangles. The plurality of first sub-chambers and the plurality of second sub-chambers are alternately arranged one by one in the second direction Y. Certainly, the supporting assembly 80 may also define a plurality of sub-chambers 70b with only one of the two heat conducting side walls 71.

Referring to FIG. 9, FIG. 11 and FIG. 12, in some embodiments of the present application, in a cross section parallel to the first direction X and the second direction Y, the cross section of each sub-chamber 70b is a triangle.

In the above technical solution, since the cross section of each sub-chamber 70b is the triangle, it is beneficial to simplifying the structure of the supporting assembly 80 and simplifying the connection between the supporting assembly 80 and each heat conducting side wall 71. Meanwhile, it is convenient for the supporting assembly 80 to have a good elastic deformation ability and a good elastic recovery ability, so that the distance between the two heat conducting side walls 71 can better adapt to the expansion deformation of the battery cells 10.

For example, the supporting assembly 80 may include a plurality of first supporting members and a plurality of second supporting members, and the plurality of first supporting members and the plurality of second supporting members may be alternately arranged one by one in the second direction Y. One second supporting member is connected between two adjacent first supporting members, and one first supporting member is connected between two adjacent second supporting members. In addition, each first supporting member is respectively connected to the two heat conducting side walls 71, and each first supporting member is oblique relative to the two heat conducting side walls 71. Each second supporting member is respectively connected to the two heat conducting side walls 71, and each second supporting member is oblique relative to the two heat conducting side walls 71. Therefore, the supporting assembly 80 can be made to have a good elastic deformation ability, an elastic recovery ability, and a simple structure.

Certainly, the shape of the cross section of each sub-chamber 70b is not limited to this. For example, the cross section of the sub-chamber 70b may also be another polygon.

Referring to FIG. 8 and FIG. 12, in some embodiments of the present application, the cavity 70a is filled with a heat absorption material 90.

In the above technical solution, since the heat absorption material 90 is arranged inside the cavity 70a, it is beneficial to improving the heat exchange capability of the heat exchange assembly 140 and facilitates improving the heat management effect on the battery cells 10.

In some embodiments, as shown in FIG. 12, a supporting assembly 80 and a heat absorption material 90 are arranged inside the cavity 70a. The supporting assembly 80 is formed into a mesh structure, and the mesh structure is filled with the heat absorption material 90, which facilitates reducing obstruction of the supporting assembly 80 on the heat absorption material 90, helps to improve the filling capability of the heat absorption material 90 in the cavity 70a, makes the heat absorption material 90 be in contact with the heat conducting side walls 71, and improves the heat conduction capability. Meanwhile, the weight of the supporting assembly 80 may not be excessively increased, which is conductive to avoiding an excessive increase in the weight of the heat exchange assembly 140 and lowering a requirement on a physical state of the heat absorption material 90. Furthermore, if the physical state of the heat absorption material 90 changes in a heat absorption process, a requirement on a physical state change of the heat absorption material 90 can also be lowered.

For example, a plurality of separated sub-chambers 70b are defined between the supporting assembly 80 and at least one heat conducting side wall 71. The supporting assembly 80 is formed into a mesh structure, so that adjacent sub-chambers 70b are communicated. The heat absorption material 90 is arranged in the plurality of sub-chambers 70b, so that the supporting assembly 80 can support each heat conducting side wall 71 and make the distance between the two heat conducting side walls 71 to change under the action of an external force, so as to better balance the stress buffering ability and the anti-bending ability.

In some embodiments of the present application, the heat absorption material 90 is a solid-liquid phase change material.

In the above technical solution, since the heat absorption material 90 is the solid-liquid phase change material, the phase change material undergoes a solid-liquid phase change at a high temperature and absorbs heat at the same time, to further improve the heat absorption and heat conduction capabilities of the heat exchange assembly 140 and improve the temperature control capability of the battery 200.

For example, the solid-liquid phase change material includes one or more of paraffin, fatty acid, and polyethylene.

For example, the first side walls 111 of at least two adjacent rows of battery units 10A are staggered in the second direction Y. At least a portion of the heat conducting plate 70 is located between the staggered battery units 10A, so that heat of a battery cell 10 (for example, heat generated by thermal runaway) can be transferred to a plurality of remaining battery cells 10 through the first side walls 111 and the heat conducting plate 70, to reduce the heat transferred from the battery cell 10 to the remaining single battery cells 10, thereby inhibiting thermal spread and improving the safety of the battery 200. Further, the heat absorption material piece 90 is arranged in the cavity 70a of the heat conducting plate 70, heat of the battery cell 10, which is beneficial for further reducing the heat transferred from the battery cell 10 to the remaining single battery cells 10 and enhancing the inhibition effect on thermal spread.

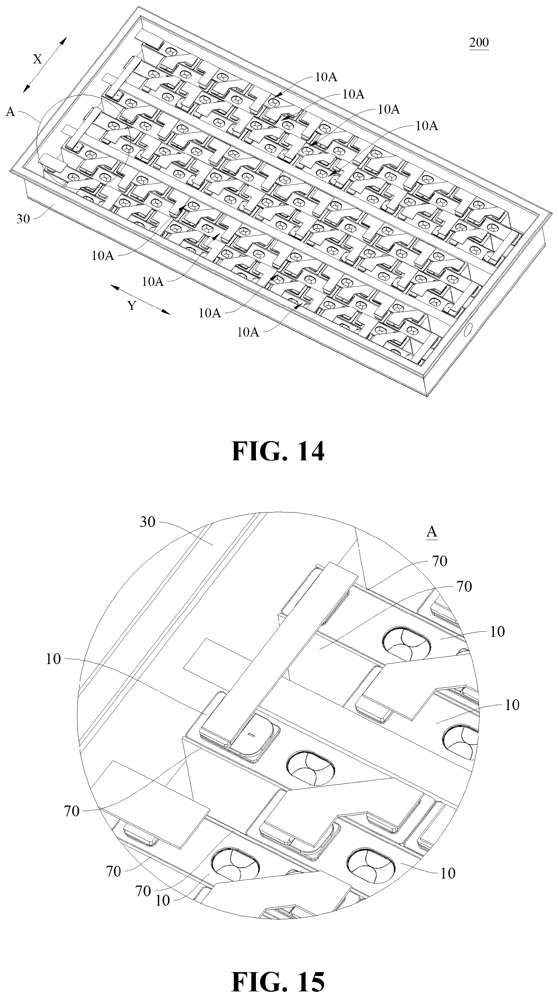

Referring to FIG. 14 and FIG. 15, in some embodiments of the present application, the battery 200 further includes a box body 30. The plurality of rows of battery units 10A are arranged in the box body 30. The heat conducting plate 70 is fixed to the box body 30. It can be seen that the heat conducting plate 70 may also be arranged inside the box body 30.

In the above technical solution, by the arrangement of the box body 30, a protection effect can be achieved on the plurality of rows of battery units 10A and the heat conducting plate 70. Fixing the heat conducting plate 70 to the box body 30 to connect the heat conducting plate 70 to the box body 30 into a whole, which is beneficial to improving the structural reliability of the battery 200. Moreover, the box body 30 can play a limiting role on the battery units 10A through the heat conducting plate 70, to achieve stable arrangement of the battery units 10A.

For example, the heat conducting plate 70 is bonded and fixed to an inner wall of the box body 30 through a structural adhesive, but not limited to this. For example, the heat conducting plate 70 is welded and fixed to the box body 30.

For example, a side surface of the heat conducting plate 70 in the second direction Y and/or the third direction Z is fixed to the inner wall of the box body 30, and the third direction Z is perpendicular to the first direction X and the second direction Y respectively.

Referring to FIG. 4, in some embodiments of the present application, the heat exchange assembly 140 further includes a heat exchange plate 100. In a third direction Z, the heat exchange plate 100 is located on one side of the plurality of rows of battery units 10A. The third direction Z is perpendicular to the first direction X and the second direction Y respectively. The heat conducting plate 70 is arranged on a surface of the heat exchange plate 100 facing the battery units 10A, and the heat conducting plate 70 is in heat-conducting connection to the heat exchange plate 100. In this case, an arrangement mode for the plurality of battery cells 10 of the battery units 10A includes, but is not limited to, arrangement modes shown in FIG. 6, FIG. 7, and FIG. 14.

In the above technical solution, by the arrangement of the heat exchange plate 100, the heat exchange plate 100 is in heat-conducting connection to the heat conducting plate 70, so that the heat exchange plate 100 can at least exchange heat with the battery cells 10 through the heat conducting plate 70, so as to further reduce heat transferred from a battery cell 10 to another single battery cell 10, thereby inhibiting thermal spread.

For example, the third direction Z being an up-down direction is taken as an example. The heat exchange plate 100 is located on lower sides of the plurality of battery cells 10. There is one or more heat conducting plates 70. The heat conducting plates 70 are arranged on an upper surface of the heat exchange plate 100, and the heat conducting plates 70 are in heat-conducting connection to the plurality of battery cells 10 of the adjacent battery units 10A. In this way, the heat exchange plate 100 can be, for example, bonded and fixed to a bottom wall of the box body 30.

For example, the heat exchange plate 100 is in heat-conducting connection to at least two battery cells 10 to enrich a heat transfer mode between the heat exchange plate 100 and the battery cells 10, to disperse the heat of the battery cells 10 and facilitate further inhibition on thermal spread.

For example, a heat exchange channel 100a for placing a heat exchange medium is arranged in the heat exchange plate 100. The heat exchange medium may be a liquid and/or a gas. The heat exchange plate 100 is configured to adjust temperatures of the at least two battery cells 10. In a case that the heat exchange plate 100 is configured to reduce the temperatures of the battery cells 10, the heat exchange channel 100a can accommodate a cooling medium to adjust temperatures of a plurality of battery cells 10. In this case, the heat exchange medium may also be referred to as a cooling medium or a cooling fluid. More specifically, the heat exchange medium may be referred to as a cooling liquid or a cooling gas. Optionally, the heat exchange medium may be water, a mixed liquid of water and ethylene glycol, heat conducting oil, a refrigerant, air, or the like.

For example, the heat exchange channel 100a may have an inlet and an outlet, to enable the heat exchange medium to flow and improve the heat exchange efficiency.

For example, the battery 200 includes a plurality of rows of battery units 10A arranged in sequence in the first direction X. Each battery unit 10A includes a plurality of battery cells 10. In a third direction Z, the heat exchange plate 100 is located on one side of all the battery cells 10. In this case, the heat exchange plate 100 may be configured to achieve heat management on all the battery cells 10. Further, the heat exchange channel 100a may be configured to include a plurality of flow sub-channels spaced apart in the first direction X. Each flow sub-channel may extend in the second direction Y, and each flow sub-channel may correspond to one row of battery units 10A.

In some embodiments, the heat conducting plate 70 is a solid metal plate.

In the above technical solution, since the heat conducting plate 70 is the solid metal plate, it is convenient to simplify the structure and processing procedures of the heat conducting plate 70, and meanwhile, it is convenient to ensure the heat conduction capability of the heat conducting plate 70.

Certainly, the heat conducting plate 70 may also be configured as a hollow structure.

In some embodiments, a thermally conductive adhesive layer is arranged between the heat conducting plate 70 and the battery cells 10.

In the above technical solution, since the thermally conductive adhesive layer is arranged between the heat conducting plate 70 and the battery cells 10, the thermally conductive adhesive layer is arranged between the heat conducting plate 70 and the first side walls 111, thereby effectively achieving the heat-conducting connection between the heat conducting plate 70 and the battery cells 10, facilitating improving the heat transfer efficiency for the heat conducting plate 70 and the battery cells 10, and enhancing the temperature control effect on the battery 200. Moreover, the heat conducting plate 70 can also play an enhancement role on the first side walls 111 of the corresponding battery cells 10 to an extent, thereby improving the anti-deformation ability of the first side walls 111 of the battery cells 10, to reduce the probability of a failure of a battery cell 10 caused by a non-uniform force on the battery cells 10.

Certainly, other heat-conducting connection modes may be used for the heat conducting plate 70 and the battery cells 10. For example, the heat conducting plate 70 is in contact with the battery cells 10.

Referring to FIG. 4, in some embodiments of the present application, the heat exchange plate 100 and the heat conducting plate 70 are integrated structural members.

In the above technical solution, since the heat conducting plate 70 and the heat exchange plate 100 are the integrated structural members, it is convenient to improve the strength of the heat conducting plate 70 and the strength of the heat exchange plate 100, save connection procedures for the heat conducting plate 70 and the heat exchange plate 100, and improve the assembling efficiency of the battery 200. Meanwhile, it is conductive to improving the heat transfer efficiency for the heat conducting plate 70 and the heat exchange plate 100 to an extent.

For example, the heat conducting plate 70 and the heat exchange plate 100 are welded and fixed. Certainly, the connection mode for the heat conducting plate 70 and the heat exchange plate 100 is not limited to this.

Certainly, in other embodiments, the heat conducting plate 70 and the heat exchange plate 100 may also be split structural members.

Referring to FIG. 6, FIG. 7, and FIG. 13 to FIG. 15, in some embodiments of the present application, the first side walls 111 of at least two adjacent rows of the battery units 10A are staggered in the second direction Y, and at least a portion of the heat conducting plate 70 is located between the staggered battery units 10A.

For the adjacent rows of battery units 10A that are staggered, the first side walls 111 of at least two battery cells 10 are opposite to the corresponding heat conducting plates 70 in the first direction X, and the first side walls 111 of the at least two battery cells 10 are staggered in the second direction Y, so that a portion of an orthographic projection, in the first direction X, of each of two first side walls 111 that are opposite to each other in the first direction X is located on an outer side, in the second direction Y, of an outer contour of an orthographic projection of the other first side wall in the first direction X, and another portion may overlap the orthographic projection of the other first side wall in the first direction X. Then, the two battery cells 10 corresponding to the two opposite first side walls 111 are staggered in the second direction Y, and any two adjacent battery cells 10 in the at least two battery cells 10 are staggered in the second direction Y. In this case, two non-adjacent battery cells 10 in the at least two battery cells 10 may also be staggered in the second direction Y, or two non-adjacent battery cells 10 in the at least two battery cells 10 may also be opposite to each other in the second direction Y.

It can be understood that two battery cells 10 being adjacent in the first direction X can be understood as no other battery cells 10 being arranged between the two battery cells 10 in the first direction X. Two battery cells 10 being not adjacent in the first direction X can be understood as at least one other battery cell 10 being arranged between the two battery cells 10 in the first direction X.

For example, if a quantity of the battery units 10A of the battery 200 is m, where m is a positive integer and m≥2. In the m battery units 10A, the first side walls 111 of n adjacent battery units 10A are opposite to each other in the first direction X and are staggered in the second direction Y. That is, if there are n battery units 10A staggered, any two adjacent battery units 10A in the n battery units 10A are staggered, where n a positive integer and 2≤n≤m. In the staggered battery units 10A, at least one first side wall 111 of one battery unit 10A is staggered from a corresponding first side wall 111 of another battery unit 10A in the second direction Y. The staggered arrangement of two first side walls 111 can be understood as corresponding two battery cells 10 are staggered.

Then, a quantity of battery cells 10 of battery units 10A that are staggered from corresponding battery cells 10 of another row of battery units 10A is less than or equal to a total quantity of the battery cells 10 of the battery units 10A. For example, for adjacent rows of battery units 10A that are staggered, each battery cell 10 in the battery units 10A is staggered from a corresponding battery cell 10 in the adjacent row of battery units 10A. Alternatively, each of some of the battery cells 10 of the battery units 10A is staggered from a corresponding battery cell 10 in the adjacent row of battery units 10A, and each of some other battery cells 10 is non-staggered from a corresponding battery cell 10 in the adjacent row of battery units 10A.

For two first side walls 111 that are staggered, a portion of an orthographic projection of one first side wall 111 in the first direction X is located on one side, in the second direction Y, of an outer contour of an orthographic projection of the other first side wall 111 in the first direction X in the second direction Y, and another portion is located within the outer contour of the orthographic projection of the other first side wall 111 in the first direction X. Furthermore, a portion of the orthographic projection of the other first side wall 111 in the first direction X is located on one side, in the second direction Y, of an outer contour of the orthographic projection of the one first side wall 111 in the first direction X, and another portion is located within the outer contour of the orthographic projection of the one first side wall 111 in the first direction X. In this case, the orthographic projections, in the first direction X, of the two first side walls 111 that are staggered partially overlap each other.

For example, referring to FIG. 13, a region formed combining a first region Ω1 with a second region Ω2 is an orthographic projection of one first side wall 111 of one battery unit 10A in the first direction X. A region formed by combining the second region Ω2 with a third region Ω3 is an orthographic projection of one first side wall 111 of another battery unit 10A in the first direction X. The second region Ω2 is an overlapping region of the orthographic projections, in the first direction X, of the two first side walls 111 that are staggered. It can be seen that for the one first side wall 111 described above, the first region Ω1 is located outside the outer contour of the orthographic projection of the other first side wall 111 in the first direction X, and the second region Ω2 is located within the outer contour of the orthographic projection of the other first side wall 111 in the first direction X. For the other first side wall 111 described above, the third region Ω3 is located outside the outer contour of the orthographic projection of the one first side wall 111 in the first direction X, and the second region Ω2 is located within the outer contour of the orthographic projection of the one first side wall 111 in the first direction X.

It can be seen that the staggered arrangement of at least two adjacent rows of battery units 10A is conducive to making full use of an arrangement space of the battery 200. Meanwhile, the staggered arrangement of the battery cells 10 can also be applicable to an irregular arrangement space. To an extent, a staggering distance of the battery cells 10 can be adaptively adjusted according to a shape of an arrangement space, to improve the adaptability of the battery cells 10 to the arrangement space.

In addition, when there is heat exchange between two battery cells 10 that are staggered, the "large surfaces" of the two battery cells 10 are staggered in the second direction Y, which is beneficial to reducing a heat exchange area between the two battery cells 10, thereby reducing an amount of heat transferred between the two battery cells 10 that are staggered and reducing peak power of heat transfer, so that when a battery cell 10 has thermal runaway, it is convenient to avoid the battery cell 10 from transferring heat mainly to one battery cell 10. By transferring the heat of the battery cell 10 having the thermal runaway in a dispersed manner, the heat transferred from the battery cell 10 having thermal runaway to the remaining single battery cell 10 can be reduced, thereby achieving a purpose of inhibiting thermal spread, which is beneficial to improving the reliability of use of the battery 200 and improving a temperature rise caused by, for example, fast charging during use.

In the above technical solution, since the first side walls 111 of the at least two adjacent rows of battery units 10A are staggered in the second direction Y, it is beneficial to making full use of an arrangement space of the battery 200 and improving the adaptability of the plurality of battery cells 10 to arrangement spaces in different shapes. Meanwhile, for two battery cells 10 that are staggered, an amount of heat transferred from any one of the battery cells 10 to the other battery cell 10 can be reduced, thereby achieving a purpose of inhibiting thermal spread, which is beneficial to improving the reliability of use of the battery 200. Furthermore, due to the above setting, no additional structure needs to be added for the battery 200, to simplify the structure of the battery 200.

It can be understood that when adjacent rows of battery units 10A are staggered, a force between the battery cells 10 is not uniform. This embodiment of the present application effectively improves the problem of a non-uniform force on the battery cells 10 by providing the heat conducting plate 70.

It should be noted that in the embodiments of the present application, "heat-conducting connection" can be understood as existence of heat exchange between two components, including direct heat exchange between two components (heat of one component is directly transferred to the other component, and the two components are in contact), and indirect heat exchange between two components (heat of one component is transferred to the other component through other structures such as a thermally conductive adhesive and a thermally conductive part). Moreover, "heat-conducting connection" can mean that in any one of two components transfers heat to the other component. That is, for one component, the component can transfer heat to the other component, or the other component can also transfer heat to the component.

In a second aspect, an embodiment of the present application further provides an electrical apparatus 1000, including the above battery 200. The battery 200 is configured to supply electric energy.

In the above technical solution, since the above battery 200 is arranged in the electrical apparatus 1000, and the heat conducting plate 70 can improve the anti-deformation ability of the first side walls 111 of the battery 200, it is beneficial to improving the reliability of the electrical apparatus 1000.

Referring to FIG. 3 to FIG. 6, FIG. 9, FIG. 12, FIG. 14, and FIG. 15 again, a battery 200 of a specific embodiment of the present application will be described.

In this embodiment of the present application, the battery 200 includes a box body 30, battery units 10A, and a heat exchange assembly 140. All the battery units 10A are arranged in the box body 30. The battery units 10A are arranged in a plurality of rows and are disposed in sequence in a first direction X. Each row of battery units 10A includes a plurality of battery cells 10 arranged in sequence in a second direction Y. Each first battery cell 10 includes two first side walls 111 opposite to each other in the first direction X and two second side walls 112 opposite to each other in the second direction Y. The first side walls 111 opposite to each other in any two adjacent rows of battery units 10A are staggered, and each first battery cell 10 in any two adjacent rows of battery units 10A is staggered from a corresponding first battery cell 10 in the other row.

The heat exchange assembly 140 includes a heat conducting plate 70 and a heat exchange plate 100. In a third direction Z, the heat exchange plate 100 is located on one side of the plurality of rows of battery units 10A. The heat conducting plate 70 is arranged on a surface of the heat exchange plate 100 facing the battery units 10A, and the heat conducting plate 70 is in heat-conducting connection to the heat exchange plate 100. The heat conducting plate 70 is fixedly connected to the box body 30. The heat conducting plate 70 is located between adjacent rows of battery units 10A that are staggered, and the heat conducting plate 70 is in heat-conducting connection to the first side walls 111 of each battery cell 10 of the corresponding battery units 10A. The first direction X is parallel to a width direction of the box body 30. The second direction Y is parallel to a length direction of the box body 30. The third direction Z is parallel to a height direction of the box body 30.

A cavity 70a for buffering a stress is provided inside the heat conducting plate 70, and a supporting assembly 80 and a heat absorption material 90 are arranged in the cavity 70a. The supporting assembly 80 is respectively connected to two opposite heat conducting side walls 71 of the heat conducting plate 70, and the supporting assembly 80 is configured to make a distance between the two heat conducting side walls 71 variable. A plurality of separated sub-chambers 70b are respectively defined between the supporting assembly 80 and each heat conducting side wall 71. On a cross section parallel to the first direction X and the second direction Y, a cross section of each sub-chamber 70b is a triangle.

In the above technical solution, by the arrangement of the heat exchange assembly 140, the problem of a non-uniform force between the battery cells 10 is improved, and it facilitates the heat conducting plate 70 to adapt to expansion of the battery cells 10, thereby improving the reliability of the battery 200.

It should be noted that the embodiments in the present application and features in the embodiments may be mutually combined without conflicts.

The above are only preferred examples of the present application, and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A battery, comprising:
a plurality of rows of battery units, wherein the plurality of rows of battery units are arranged in a first direction; each row of battery units comprises a plurality of battery cells arranged in sequence in a second direction; each battery cell comprises a first side wall; the first side wall is the side wall with the largest area; the first direction and the second direction are perpendicular to each other; and
a heat exchange assembly, wherein the heat exchange assembly comprises a heat conducting plate; the heat conducting plate extends between adjacent rows of battery units; and the heat conducting plate directly faces the first side walls of at least some of the battery cells of adjacent battery units.

2. The battery according to claim 1, wherein opposite side walls of the heat conducting plate are in contact with a plurality of first side walls opposite to each other.

3. The battery according to claim 1 or 2, wherein a cavity for buffering a stress is provided inside the heat conducting plate.

4. The battery according to claim 3, wherein a supporting assembly is arranged inside the cavity; the heat conducting plate comprises two heat conducting side walls opposite to each other; the heat conducting side walls directly face the first side walls; the supporting assembly is respectively connected to the two heat conducting side walls; and the supporting assembly is configured to make a distance between the two heat conducting side walls variable.

5. The battery according to claim 4, wherein a plurality of separated sub-chambers are defined between the supporting assembly and at least one of the heat conducting side walls.

6. The battery according to claim 5, wherein on a cross section parallel to the first direction and a second direction, a cross section of each of the sub-chambers is a triangle.

7. The battery according to any one of claims 3 to 6, wherein the cavity is filled with a heat absorption material.

8. The battery according to claim 7, wherein the heat absorption material is a solid-liquid phase change material.

9. The battery according to any one of claims 2 to 8, further comprising a box body, wherein the plurality of rows of battery units are arranged in the box body; and the heat conducting plate is fixed to the box body.

10. The battery according to any one of claims 1 to 9, wherein the heat exchange assembly further comprises a heat exchange plate; in a third direction, the heat exchange plate is located on one side of the plurality of rows of battery units; the third direction is perpendicular to the first direction and the second direction respectively; and the heat conducting plate is arranged on a surface of the heat exchange plate facing the battery units and is in heat-conducting connection to the heat exchange plate.

11. The battery according to claim 10, wherein the heat conducting plate is a solid metal plate.

12. The battery according to claim 10 or 11, wherein a thermally conductive adhesive layer is arranged between the heat conducting plate and the battery cells.

13. The battery according to any one of claims 10 to 12, wherein the heat exchange plate and the heat conducting plate are integrated structural members.

14. The battery according to any one of claims 1 to 13, wherein the first side walls of at least two adjacent rows of the battery units are staggered in the second direction, and at least a portion of the heat conducting plate is located between the staggered battery units.

15. An electrical apparatus, comprising the battery according to any one of claims 1 to 14.
